# EUROPÄISCHE PATENTSCHRIFT

(11) **EP 0 429 887 B1**
(45) Veröffentlichungstag und Bekanntmachung des Hinweises auf die Patenterteilung: **10.02.1993**
(21) Anmeldenummer: 90121081.5
(22) Anmeldetag: 03.11.1990
(51) Int. Cl.: A22C 21/00

(54) **Verfahren und Vorrichtung zum Ablösen des Fleisches von Geflügelkörpern**
Method and device for removing meat from poultry
Procédé et dispositif pour séparer la viande de volailles

(30) Priorität: 29.11.1989 DE 3939340
(43) Veröffentlichungstag der Anmeldung: 05.06.1991
(73) Patentinhaber: NORDISCHER MASCHINENBAU RUD. BAADER GMBH + CO KG, 23560 Lübeck (DE)
(72) Erfinder: Landt, Andreas, W-2400 Lübeck (DE); Wagner, Wolfgang, Dipl.-Ing., W-2067 Reinfeld (DE)

(56) Entgegenhaltungen:
- EP-A- 0 168 865
- EP-A- 0 207 553
- EP-A- 0 336 162
- DE-C- 3 444 430

## Beschreibung

Die Erfindung geht aus von einem verfahren zum maschinellen Ablösen filetförmigen Fleisches von Geflügelkörpern, die als "front-half" präpariert sind und bei denen Flügel und Haut entfernt sind, mittels steuerbarer Schabeklingen, die während des Schabevorganges am Geflügelkörper geführt werden, sowie von einer Vorrichtung zur Durchführung des Verfahrens , mit einem umlaufend angetriebenen, mit sattelförmigen Aufnahmen versehenen Förderer zur Förderung der zu bearbeitenden Teile mit der Brust nach oben und dem Hals voraus, wobei die steuerbaren Schabeklingen jeweils zu beiden Seiten der Bahn der Aufnahmen angeordnet, schalenförmig profiliert und mit ihrer Hohlseite der Bahn der Aufnahmen zuweisend ausgebildet sind.

Aus der US-PS 4 557 017 ist eine Einrichtung zum Gewinnen des Brustfleisches von Brustsektionen von Geflügelkörpern bekannt, die auf einem sattelförmigen Förderer mit der Brust nach oben fixiert durch den Wirkbereich einer Reihe von Bearbeitungswerkzeugen hindurchgefördert werden. Dabei wird das Brustfleisch zunächst mittels zweier Messerklingen 62 zu beiden Seiten des Brustbeins abgetrennt und dann von diesen Einschnitten ausgehend von den darunter liegenden Skeletteilen abgestreift. Das Abstreifen erfolgt durch geneigt zu der Bahn des Förders angeordnete Abstreifelemente 72 und 74 deren Abstreifkanten aus einem flexiblen Werkstoff bestehen.

Aus der EP 168 865 ist weiter eine Filetiereinrichtung für Geflügel bekannt, bei der das Filetfleisch ausgehend von den Rippenpartien zu dem Brustbein hin von den Geflügelkörpern mittels Werkzeugen abgeschoben wird, die längs des Untertrums eines mit Sätteln für die Fixierung der Geflügelkörper bestückten Förderers angeordnet sind. Dabei werden nach Einschneiden des Rückenfleisches zu beiden Seiten des Rückgrates und Entfernen des Gabelbeinkopfes die an der Karkasse verbliebenen Gabelbeinäste mittels einer Blende freigeschabt und anschließend das Filetfleisch bis in die Nähe des Kamms des Brustbeins mittels Abstreifern 43 abgeschoben. Mit Hilfe von Abstreiffingern 46 wird dann das Fleisch im Übergangsbereich zum Brustbein und dessen Flanken gelöst und schließlich von dem Kamm des Brustbeins abgeschabt.

Schließlich ist in der US-PS 4 682 386 eine Einrichtung der vorstehenden Gattung offenbart, bei der mit dem Brustbein nach oben auf Sätteln fixierte und geförderte Geflügelkörper im Untertrum des Förderers zwecks Gewinnung des Fleisches bearbeitet werden. Dabei wird zunächst mittels stationärer Klingen 46/47 das Fleisch im Bereich der Rippen von dem Skelett getrennt, worauf das Abschieben des Fleisches von dem Gabelbein unter Trennen der Flügelsehnen durch in die Bahn der Geflügelkörper einsteuerbare und dort ebenfalls stationär verharrende flügelförmige Klingen 75/76 erfolgt. Schließlich sorgen in Aktivstellung einen Tunnel bildende Platten 98/99 dafür , daß das Fleisch bis an das Brustbein heran von dem Skelett abgestreift wird. Die vollständige Trennung besorgt ein gabelförmiger Filetabstreifer 116 , der das Fleisch als Doppelfilet von den Flanken des Brustbeins abstreift.

Mittels der zitierten Einrichtungen ist es grundsätzlich möglich, das Fleisch von Geflügelkörpern in Form von Einzel- oder Doppelfilets auf maschinellem Wege zu gewinnen. Bei qualitativer und quantitativer Bewertung ist jedoch festzustellen, daß das Ergebnis der Bearbeitung in dieser Hinsicht nicht befriedigt. Das liegt im einzelnen daran, daß die Trennfläche der Filets von dem Skelett des Geflügelkörpers insbesondere in den Teilen sehr rauh und zerklüftet ist, die im Bereich der Rippen auflagen. Ursache dafür ist, daß man bisher auf die gezielte Gewinnung der im Bereich der Schulterblätter befindlichen Fleischpartien verzichtet hat, was bewirkte, daß das von dem Skelett abgelöste Fleisch in diesem Bereich undefiniert abriß.

Es ist die Aufgabe der Erfindung, auch die Fleischteile zu gewinnen, die im Bereich der Anbindung der Rippen an das Rückgrat auf den Rippen bzw. den sie teilweise abdeckenden Schulterblättern aufliegen.

Diese Aufgabe wird erfindungegemäß dadurch gelöst, daß die Schabeklinge beim Beginn des Schabevorganges am Schulterblatt-Knochen (scapula) anliegt und von diesem geführt wird. Jede Schabeklinge weist zu diesem Zweck eine gegen die Laufrichtung gerichtete schwalbenschwanzförmige Schneidkante auf und ist derart beweglich gehaltert , daß sie aus einer Ruhestellung in Bereich der Mittenebene der Bahn der Aufnahmen längs der durch die Rippen und das Schulterblatt (scapula) bestimmtem Kontur des Skelettkörpers führbar ist.

Die damit erzielbaren Vorteile bestehen insbesondere darin, daß die das Fleisch im Bereich der Rippen abhebenden Werkzeuge durch die Schulterblätter geführt werden. Dabei ist aufgrund der schwalbenschwanzförmigen Ausgestaltung der Schabeklingen dafür Sorge getragen, daß jeweils eine Schabekomponente entsteht, die im wesentlichen in Längsrichtung der Rippen ausgerichtet ist, so daß die Gefahr des "Unterfahrens" der Rippen trotz Andruckes der Schabeklingen gegen dieselben vermieden wird.

Der Andruck der Schabeklingen kann durch Federkraft erfolgen, wobei die konturgemäße Steuerung der Schabeklingen durch den Skelettkörper selbst erfolgt.

Dabei ergibt sich ein optimaler Schälvorgang, wenn jede Schälklinge während ihrer Führung längs der Kontur des Skelettkörpers stets so ausgerichtet ist, daß sie im wesentlichen tangential zu dem Skelettkörper bezogen auf den jeweiligen Arbeitspunkt der Schneidkante verläuft.

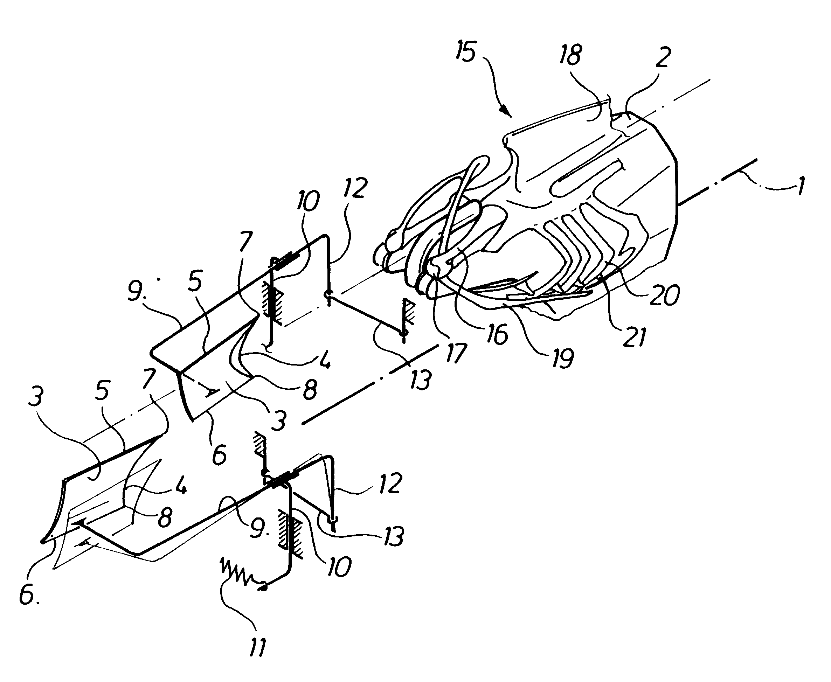

Die erfindungsgemäße Vorrichtung wird nachstehend anhand eines in der Zeichnung dargestellten Ausführungsbeispiels näher erläutert. Die einzige Figur zeigt in vereinfachter axonometrischer Darstellung die erfindungsgemäße Vorrichtung zum Gewinnen der im Bereich der Anbindung der Rippen an das Rückgrat auf den Rippen bzw. den sie teilweise abdeckenden Schulterblättern aufliegenden Fleischteile. Diese Vorrichtung ist in einem nicht gezeigten Maschinengestell einer Geflügelfiletiermaschine zum Gewinnen des auch auf dem übrigen Skelett von Geflügelkörpern aufliegenden Fleisches in Filetform installiert. Diese Vorrichtung besteht im wesentlichen aus je einer Schabeklinge 3 zu beiden Seiten der Bahn eines mit Aufnahmen 2 für die Aufnahme und Förderung von Geflügelkörpern versehenen Förderers 1 . Jede Schabeklinge 3 ist in Förderrichtung der Aufnahmen 2 schalenförmig profiliert und weist mit ihrer Hohlseite der Bahn der Aufnahmen 2 zu . Der gegen die Laufrichtung derselben gerichtete Stirnteil der Schabeklinge 3 ist mit einer schwalbenschwanzförmigen, nach innen angefasten Schneidkante 4 ausgestaltet, wobei im Bereich der oberen und unteren Kanten 5 und 6 Spitzen 7 und 8 ausgebildet sind, deren letztere 8 gegenüber der ersteren 7 zurückliegend angeordnet ist. Jede Schabeklinge 3 ist an dem einen Ende eines Tragarmes 9 befestigt, der als zweiarmiger Hebel ausgebildet und um eine außerhalb der Bahn der Aufnahmen 2 angeordnete Vertikalachse 10 nach außen gegen die Kraft einer Feder 11 horizontal verschwenkbar gelagert ist, wobei der Tragarm 9 zusätzlich um seine Längsachse schwenkbar gelagert ist. Das andere Ende des Tragarms 9 ist mit einem nach unten weisenden Hebelteil 12 versehen, an dessen freiem Ende ein Lenker 13 angreift, der andernends gestellfest gelagert ist.

Die Wirkungsweise der Vorrichtung wird nachstehend anhand des Durchlaufs eines Geflügelkörpers 15 dargestellt. Dieser ist als "front-half" präpariert, d. h. stellt den Teil eines Geflügelkörpers dar, der durch einen schräg durch den Körper verlaufenden, das Becken mit den Beinen abtrennenden Schnitt entsteht. Von dem so erzielten Körperabschnitt sind dann noch die Flügel und die Haut entfernt. Dieses "front-half" wird auf die Aufnahme 2 des Förderers 1 aufgestülpt und zwar so, daß die die Flügel tragenden Gelenkköpfe 17 der Rabenbeine (coracoidae) 16 in Förderrichtung voraus und das Brustbein (sternum) 18 nach oben weisen. Der in dieser Weise ausgerichtete Geflügelkörper 15 wird nun durch geeignete, beispielsweise in der DE-PS 36 32 187 beschriebene Mittel fixiert und den Schabeklingen 3 zugeführt. Jede derselben ist so eingestellt, daß sie in der Grundstellung mit ihrer vorausweisenden oberen Spitze 7 unmittelbar unterhalb des entsprechenden Gelenkkopfes 17 und in der Ebene der Außenflanke des dort nach unten anschließenden Schulterblattes (scapula) 19 in das Fleisch eintaucht. Im weiteren Verlauf des Vorschubes übernimmt zunächst das Schulterblatt 19 die Steuerung der Schabeklinge 3 , indem die schwalbenschwanzförmige Schneidkante 4 an diesem herabgleitet. Dabei wird die Schabeklinge 3 nach außen verdrängt, was aufgrund der Lagerung und Anlenkung des die Schabeklinge 3 tragenden Tragarms 9 zu einer Versetzung derselben nach unten und gleichzeitig Kippung um deren Längsachse führt. Der untere, die Spitze 8 einschließende Teil der Schabeklinge 3 überläuft daher den an die Wirbelsäule anschließenden Teil der Rippen 20 im Bereich der diese verbindenden Hakenfortsätze 21 und löst das dort aufliegende Fleisch von dem Skelettkörper durch einen Schabeprozeß, der aufgrund der schwalbenschwanzförmigen Ausbildung der Schneidkante 4 jeweils eine im wesentlichen längs der Rippen 20 verlaufende Schabekomponente erzeugt. In diesem Stadium des Schabeprozesses erfolgt die Kontursteuerung der Schabeklinge 3 durch Auflage derselben auf den Rippen 20 .

Nach Lösen dieser Fleischteile kann das Filetieren in bekannter Weise vollendet werden, so daß je nach Vorgehensweise ein Doppelfilet oder zwei Einzelfilets gewonnen werden mit einer Fleischausbeute, die gegenüber den nach den bekannten Verfahren gewonnenen Filets um die Rückenfleischteile verbessert ist.

## Patentansprüche

1. Verfahren zum maschinellen Ablösen filetförmigen Fleisches von Geflügelkörpern, die als "front-half" präpariert sind und bei denen Flügel und Haut entfernt sind, mittels steuerbarer Schabeklingen, die während des Schabevorganges am Geflügelkörper geführt werden, **dadurch gekennzeichnet** , daß die Schabeklinge (3) beim Beginn des Schabevorganges am Schulterblatt-Knochen (scapula) (19) anliegt und von diesem geführt wird.

2. Vorrichtung zur Durchführung des Verfahrens nach Anspruch 1 , mit einem umlaufend angetriebenen, mit sattelförmigen Aufnahmen versehenen Förderer zur Förderung der zu bearbeitenden Teile mit der Brust nach oben und dem Hals voraus, sowie mit jeweils zu beiden Seiten der Bahn der Aufnahmen angeordneten, schalenförmig profilierten und mit ihrer Hohlseite der Bahn der Aufnahmen zuweisende steuerbare Schabeklingen, **dadurch** **gekennzeichnet** , daß jede Schabeklinge (3) eine gegen die Laufrichtung gerichtete schwalbenschwanzförmige Schneidkante (4) aufweist, wobei die Schabeklinge (3) derart beweglich gehaltert ist, daß sie aus einer Ruhestellung im Bereich der Mittenebene der Bahn der Aufnahmen (2) längs der durch die Rippen und das Schulterblatt (scapula) (19) bestimmten Kontur des Skelettkörpers führbar ist.

3. Vorrichtung nach Anspruch 1 , **dadurch gekennzeichnet** , daß jede Schabeklinge (3) jeweils von dem vorbeilaufenden Skelettkörper gesteuert gegen Federkraft verdrängbar gelagert ist.

4. Vorrichtung nach Anspruch 1 oder 2 , **dadurchkennzeichnet** , daß jede Schabeklinge (3) während ihrer Führung längs der Kontur des Skelettkörpers stets so ausgerichtet ist, daß sie im wesentlichen tangenial zu dem Skelettkörper, bezogen auf den jeweiligen Arbeitspunkt der Schneidkante (4) verläuft.

5. Vorrichtung nach Anspruch 3 , **dadurch gekennzeichnet** , daß die Schabeklingen (3) derartig angelenkt sind, daß eine Höhenverlagerung derselben in Abhängigkeit von der Verdrängbewegung erfolgt.

## Claims

1. Method for the mechanical detaching of filet-shaped flesh from poultry carcasses, which are prepared as "front half" and in which the wings and skin thereof are removed, by means of controllable scraper blades which are guided at the poultry carcasses during the scraping process, characterised thereby that the scraper blade (3) bears on the shoulder-blade bone (19) (scapula) and is guided on this.

2. Device for carrying out the method according to claim 1, with a conveyor, which is driven to circulate and is provided with saddle-like receptacles, for the conveying of the parts to be processed with the breast upwards and the neck forwards, as well as with controllable scraper knives, which are arranged at both sides of the path of the receptacles, are profiled to be shell-like and face by their hollow side the path of the receptacles, characterised thereby that each scraper blade (3) has a dovetail-shaped cutting edge (4) oriented against the running direction, wherein the scraper blade (3) is held to be movable in such a manner that it is guidable, from a rest setting in the region of the central plane of the path of the receptacles (2), along the contour, which is determined by the ribs and the shoulder blade (scapula) (19), of the skeletal body.

3. Device according to claim 1, characterised thereby that each scraper blade (3) is mounted to be displaceable, controlled by the skeletal body running past, against spring force.

4. Device according to claim 1 or 2, characterised thereby that each scraper blade (3) is constantly so oriented during its guidance along the contour of the skeletal body that it runs substantially tangentially to the skeletal body with respect to the respective point of action of the cutting edge (4).

5. Device according to claim 3, characterised thereby that the scraper blades (3) are articulated in such a manner that a relocation in height of the same takes place in dependence on the displacement movement.

## Revendications

1. Procédé destiné à détacher à la machine, au moyen de lames de raclage réglables qui sont guidées sur le corps de volaille pendant le processus de raclage, une chair en forme de filets de corps de volailles qui sont préparés en tant que "front-half" ou moitiés avant et dont les ailes et la peau sont enlevées, **caractérisé en ce que** la lame de raclage (3) repose, au début du processus de raclage, sur l'os d'omoplate (scapula) (19) et est guidée par celui-ci.

2. Dispositif de mise en oeuvre du procédé de la revendication 1, comprenant un transporteur entraîné en circulation, pourvu de récepteurs en forme de selles pour transporter les éléments à traiter les blancs tournés vers le haut et le cou vers l'avant, ainsi que des lames de raclage réglables profilées en forme de coquilles et tournées par leurs côtés creux vers la bande des récepteurs, disposées respectivement des deux côtés de la bande des récepteurs, **caractérisé en ce que** chaque lame de raclage (3) présente une arête de coupe (4) en forme de queue d'aronde orientée dans le sens opposé à la direction de déplacement, la lame de raclage (3) étant attachée de façon mobile d'une manière telle qu'elle peut être amenée, à partir d'une position de repos, dans la zone du plan médian de la bande des récepteurs (2) le long du contour, défini par les côtes et l'omoplate (scapula) (19), du corps de squelette.

3. Dispositif selon la revendication 1, **caractérisé en ce que** chaque lame de raclage (5) est respectivement logée en étant mobile, en opposition à une force élastique, d'une manière réglée par le corps de squelette qui la longe.

4. Dispositif selon la revendication 1 ou 2, **caractérisé en ce que** chaque lame de raclage (3) est constamment orientée, pendant qu'elle est guidée le long du contour du corps de squelette, d'une manière telle qu'elle est d'un tracé sensiblement tangentiel au corps de squelette, en ce qui concerne le point de travail respectif de l'arête de coupe (4).

5. Dispositif selon la revendication 3, **caractérisé en ce que** les lames de raclage (3) sont articulées d'une manière telle qu'il se produit un déplacement en hauteur de celles-ci en fonction du mouvement de déplacement.
